# EUROPÄISCHE PATENTSCHRIFT

(11) **EP 1 294 489 B1**
(45) Veröffentlichungstag und Bekanntmachung des Hinweises auf die Patenterteilung: **09.01.2008**
(21) Anmeldenummer: 02721947.6
(22) Anmeldetag: 08.05.2002
(51) Int. Cl.: B05B 1/16, F16K 31/60

(54) **WASSERAUSFLUSSARMATUR**
WATER OUTFLOW FITTING
APPAREIL DE ROBINETTERIE DE SORTIE D'EAU

(30) Priorität: 12.05.2001 DE 20108057 U
(43) Veröffentlichungstag der Anmeldung: 26.03.2003
(73) Patentinhaber: Weidmann Plastics Technology AG, 8640 Rapperswil (CH)
(72) Erfinder: BOESCH, Paul, CH-9642 Ebnat-Kappel (CH)
(74) Vertreter: Groner, Manfred
(86) Internationale Anmeldenummer: PCT/CH2002/000252
(87) Internationale Veröffentlichungsnummer: WO 2002/092238

(56) Entgegenhaltungen:
- EP-A- 0 891 815
- FR-A- 2 323 451
- US-A- 5 383 604

## Beschreibung

Die Erfindung betrifft eine Wasserausflussarmatur nach dem Oberbegriff des Anspruchs 1.

Wasserauslaufarmaturen dieser Art sind insbesondere als Küchenbrausen und Badebrausen seit langem bekannt. Die Betätigungsvorrichtung ist bei diesen Wasserauslaufarmaturen so ausgebildet, dass ein Umschalten zwischen einem Zentralstrahl, auch Perlatorstrahl genannt, und einem Brausestrahl möglich ist. Der Brausestrahl wird durch Wasserdruck gehalten, sofern dieser mehr als beispielsweise 0,5 bar beträgt.

Bei einer bekannten Küchenbrause weist die Betätigungsvorrichtung aussenseitig am Gehäuse einen Kipphebel auf, der mit einer Drehachse am Gehäuse gelagert ist und der mit dem Umschaltventil verbunden ist. In der einen Kippstellung des Hebels ist das Umschaltventil auf Zentralstrahl und in der anderen Kippstellung auf Brausestrahl eingestellt. Bei einer solchen Betätigung besteht die Schwierigkeit, dass der Hebel aussenseitig am Gehäuse wesentlich vorsteht und ein Abdichten des Hebels gegenüber dem Gehäuse schwierig ist.

Durch die EP-A-0 891 815 ist eine Wasserauslaufarmatur bekannt geworden, bei welcher die Betätigungsvorrichtung eine gummielastische Membran aufweist, die in eine Öffnung des Gehäuses eingesetzt ist. Unterhalb der gummielastischen Membran befindet sich ein Hebel, der durch Eindrücken der Membran an entsprechenden Stellen umstellbar ist. Bei dieser Betätigungsvorrichtung besteht die Schwierigkeit, dass bei einer Betätigung ein positiver, mechanischer und stabiler Tasteindruck vermisst wird.

Der Erfindung liegt die Aufgabe zugrunde, eine Wasserausflussarmatur der genannten Art zu schaffen, welche die genannten Nachteile vermeidet und die insbesondere im Hinblick auf das Umschalten verbessert ist.

Die Aufgabe ist bei einer gattungsgemässen Wasserausflussarmatur gemäss Anspruch 1 gelöst. Bei der erfindungsgemässen Wasserausflussarmatur werden durch die beiden Tasten zwei im Abstand zueinander angeordnete Betätigungsfelder gebildet, die visuell gut erkennbar und unterscheidbar sind. Versuche haben einen überraschend positiven und stabilen Eindruck bei einer Betätigung ergeben. Das Tastempfinden ist vergleichbar mit wesentlich aufwendigeren mechanischen Tasten.

Nach einer Weiterbildung der Erfindung weist die Membran an ihrer Unterseite einen umlaufenden, rahmenförmigen Rand auf, der ebenfalls aus einem vergleichsweise harten Kunststoff hergestellt ist und der in eine Öffnung des Gehäuses eingerastet ist. Diese Weiterbildung ermöglicht eine einfache und doch sichere Befestigung der Betätigungsvorrichtung.

Eine besonders hohe Dichtigkeit ergibt sich dann, wenn die Membran einem umlaufenden Rand aufweist, welcher den Rahmen überragt und am Gehäuse anliegt. Die Herstellung ist besonders kostengünstig und die Montage einfach, da die beiden Tasten und die Schutzmembran eine einstückige und im Spritzguss hergestellte Einheit bilden. Vorzugsweise ist auch der genannte Rahmen ein Teil dieser Einheit und dieser ist ebenfalls vorzugsweise im Spritzguss an die Schutzmembran angespritzt. Die Wasserausflussarmatur eignet sich insbesondere als Küchenbrause. Denkbar ist aber auch eine Ausführung beispielsweise als Duschbrause.

Weitere Vorteile ergeben sich aus den abhängigen Ansprüchen, der nachfolgenden Beschreibung sowie der Zeichnung.

Ein Ausführungsbeispiel der erfindungsgemässen Wasserausflussarmatur wird nachfolgend anhand der Zeichnung erläutert. Es zeigen:
- Figuren 1-3: schematische Ansichten der erfindungsgemässen Wasserausflussarmatur,
- Figur 4: ein Teilschnitt durch die Wasserausflussarmatur,
- Figur 5: eine Ansicht der Betätigungsvorrichtung und
- Figur 6: eine Ansicht der Unterseite der Betätigungsvorrichtung.

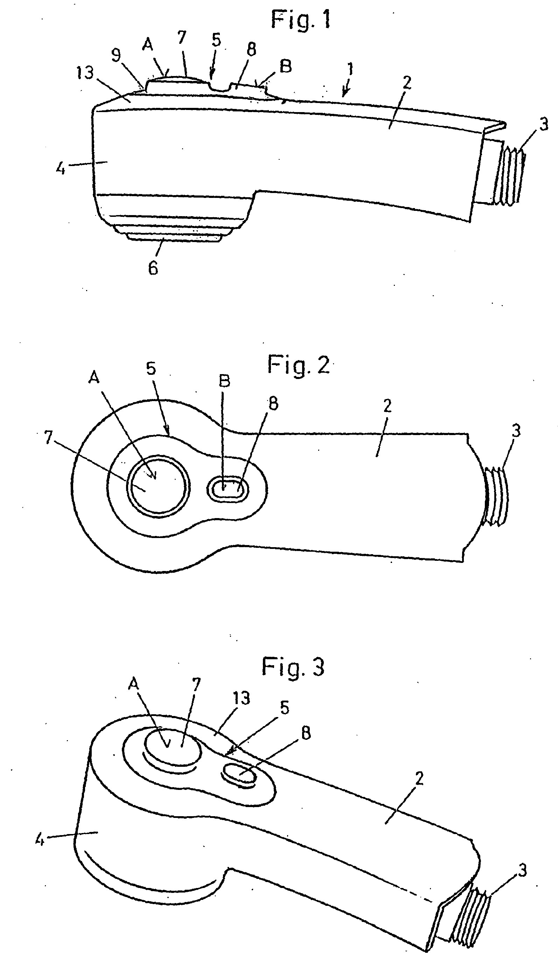

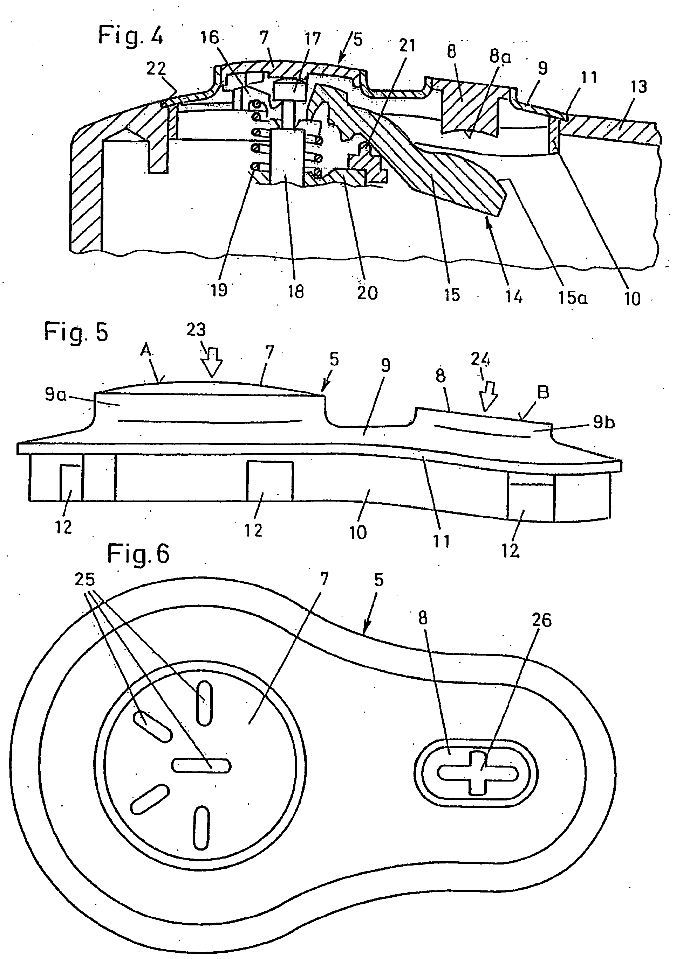

Die Wasserauslaufarmatur 1 weist gemäss den Figuren 1 bis 3 ein Gehäuse 2 auf, in das an einem Ende ein Gewindeanschluss 3 für eine hier nicht gezeigte flexible Wasserleitung eingesetzt ist. Das Gehäuse 2 weist einen Kopfteil 4 auf, an dem in einer oberen Wandung 13 eine Betätigungsvorrichtung 5 angeordnet ist, die gemäss Figur 4 in eine Öffnung 22 dieser Wandung 13 dicht eingesetzt ist. An der Unterseite des Kopfes 4 ist ein Auslass 6 angeordnet, an welchem das Wasser wahlweise als Zentralstrahl oder als Brausestrahl austritt. Im Innern des Kopfes 4 ist ein bekanntes und hier nicht gezeigtes Umschaltventil angeordnet, das mittels der Betätigungsvorrichtung 5 umschaltbar ist. Solche Umschaltventile sind dem Fachmann gut bekannt.

Die Betätigung des Umschaltventils erfolgt gemäss Figur 4 mit einem Kipphebel 14, der an einem Steg 21 des Gehäuses 2 abgestützt ist und der einen ersten gabelförmigen Arm 16 sowie einen zweiten einfachen Arm 15 aufweist. Der Kipphebel 14 umgreift am gabelförmigen ersten Arm 16 ein bolzenförmiges Teil 17, das an einem unteren Ende an einem vertikal beweglichen Stössel 18 des Umschaltventils aufliegt und an einem oberen Ende an der Unterseite einer grossen Taste 7 anliegt. Eine Druckfeder 19 ist am Ventilkörper 20 und am gabelförmigen Arm 16 abgestützt und hält den Kipphebel 14 in der in Figur 4 gezeigten Stellung. Der zweite einfache Arm 15 ragt in den Bereich einer kleinen Taste 8, die wie ersichtlich eine konkave untere Tastfläche 8a aufweist, die in der in Figur 4 gezeigten Stellung des Kipphebels 14 im Abstand zum zweiten Arm 15 angeordnet ist.

Die beiden Tasten 7 und 8 bilden jeweils ein Tastfeld A bzw. B. Das Tastfeld A der grossen Taste 7 ist wie ersichtlich konvex ausgebildet, während das Tastfeld B im wesentlichen eben und etwas geneigt ist. Zudem ist das Tastfeld A kreisförmig während das Tastfeld B kleiner und länglich ausgebildet ist. Die beiden Tasten 7 und 8 bilden mit einer Schutzmembran 9 sowie einem Befestigungsrahmen 10 eine Einheit. Vorzugsweise ist diese Einheit im Spritzgussverfahren hergestellt. Wesentlich ist, dass die beiden Tasten 7 und 8 aus einem wesentlich härteren Kunststoff hergestellt sind als die Schutzmembran 9. Die Tasten 7 und 8 sind beispielsweise aus einem Polypropylen und die Schutzmembran aus einem thermoplastischen Elastomer hergestellt. Die Verbindung der Tasten 7 und 8 mit der Schutzmembran 9 erfolgt am Umfang dieser Taste und an der Innenseite nach aussen gestülpter Ränder 9a und 9b der Schutzmembran 9, wie die Figur 5 zeigt. Die Tasten 7 und 8 sind entsprechend bezüglich der Wandung 13 und auch bezüglich des Hauptbereichs der Schutzmembran 9 deutlich erhöht. Die Tastenfelder A und B sind visuell und auch tastbar gut zu finden und unterscheidbar. Denkbar ist auch eine Ausführung, bei welcher die Schutzmembran 9 aus zwei Teilen besteht, wobei der eine Teil mit der Taste 7 und der andere Teil mit der Taste 8 verbunden ist. Die Einheiten aus Taste 7 bzw. 8 und Schutzmembran sowie Befestigungsrahmen sind dann somit getrennt in je einer Öffnung des Gehäuses 2 montiert.

Der Befestigungsrahmen 10 ist wie erläutert aus einem vergleichsweise harten Kunststoff, beispielsweise einem Polyamid hergestellt und an der Unterseite der Schutzmembran 9 angespritzt. Diese Schutzmembran 9 überragt gemäss Figur 4 den Befestigungsrahmen 10 mit einem Rand 11, der am Rand der Öffnung 22 am Gehäuse 2 dichtend anliegt. Zur Befestigung der Betätigungsvorrichtung 5 am Gehäuse 2 ist der Befestigungsrahmen 10 gemäss Figur 5 mit mehreren Rastzungen 12 versehen, die in der Öffnung 22 am Gehäuse 2 eingerastet sind.

In der in Figur 4 gezeigten Stellung des Kipphebels 14 ist der Zentralstrahl eingestellt, welcher durch die Druckfeder 19 gehalten ist. Wird nun die Taste 7 in Richtung des Pfeils 23 nach unten bewegt, so wird der Stössel 18 in gleicher Richtung nach unten bewegt und das Umschaltventil auf Brausestrahl umgestellt. Diese Stellung wird in bekannter Weise durch den Wasserdruck gehalten, sofern dieser beispielsweise höher als 0,5 bar ist. Gleichzeitig wird der Kipphebel 14 gekippt und der zweite Arm 15 befindet sich in einer Stellung, in welcher eine konvexe Fläche 15a an der konkaven Fläche 8a der kleinen Taste 8 anliegt. Soll wieder auf Zentralstrahl umgestellt werden, so wird die kleine Taste 8 in Richtung des Pfeiles 24 nach unten gedrückt. Der Kipphebel 14 gelangt nun wieder in die in Figur 4 gezeigte Stellung, in welcher er durch die Druckfeder 19 gehalten wird. Gleichzeitig gelangt der Stössel 18 ebenfalls in die in Figur 4 gezeigte Ausgangsstellung und entsprechend ist das Umschaltventil auf Zentralstrahl umgestellt. Die genannten Betätigungen mit den Tasten 7 und 8 werden als stabil empfunden. Dies wird noch weiter verbessert, wenn die Tasten 7 und 8 gemäss Figur 6 an der Unterseite vorspringende Rippen 25 und 26 aufweisen. Die Rippe 26 der kleinen Taste 8 ist wie ersichtlich etwa kreuzförmig ausgebildet, während die Rippen 25 mehrheitlich radial angeordnet sind. Dies gibt ein besonders stabilen Eingriff der Tasten 7 und 8 am Kipphebel 14.

## Patentansprüche

1. Wasserausflussarmatur, mit einem Gehäuse (2), einer Anschlussvorrichtung (3) für den Anschluss einer Wasserleitung, einem Auslass (6), einer Betätigungsvorrichtung (5) und einem im Gehäuse (2) angeordneten Umschaltventil, das mittels der Betätigungsvorrichtung (5) zwischen zwei Stellungen mit unterschiedlicher Strahlbildung umstellbar ist, wobei die Betätigungsvorrichtung (5) zwei im Abstand zueinander angeordnete und unabhängig voneinander betätigbare Tasten (7, 8) und eine Schutzmembran (9) aufweist, **dadurch gekennzeichnet, dass** die beiden Tasten (7, 8) aus einem vergleichsweise harten Kunststoff und die Membran aus einem wesentlich weicheren gummielastischen Kunststoff hergestellt sind und dass die beiden Tasten (7, 8) und die Schutzmembran (9) eine einstückige und im Spritzguss hergestellte Einheit bilden.

2. Armatur nach Anspruch 1, **dadurch gekennzeichnet, dass** an der Unterseite der Schutzmembran (9) ein umlaufender Befestigungsrahmen (10) angeordnet ist, der ebenfalls aus einem vergleichsweise harten Kunststoff hergestellt ist und der in eine Öffnung (22) des Gehäuses (2) eingerastet ist.

3. Armatur nach Anspruch 1 oder 2, **dadurch gekennzeichnet, dass** die beiden Tasten (7, 8), die Schutzmembran (9) sowie der Befestigungsrahmen (10) eine im Spritzguss hergestellte Einheit bilden.

4. Armatur nach einem der Ansprüche 1 bis 3, **dadurch gekennzeichnet, dass** die Schutzmembran (9) zwischen den beiden Tasten (7, 8) und um diese Tasten (7, 8) vergleichsweise flach ausgebildet ist und die beiden Tasten (7, 8) jeweils an ihrem Umfang mit einem aufgestülpten Rand (9a, 9b) durch Spritzguss verbunden sind.

5. Armatur nach einem der Ansprüche 1 bis 4, **dadurch gekennzeichnet, dass** die Betätigungsvorrichtung (5) über einem Kipphebel (14) angeordnet ist, der zur Umstellung des Umschaltventils mit den beiden Tasten (7, 8) zusammenarbeitet.

6. Armatur nach Anspruch 5, **dadurch gekennzeichnet, dass** eine erste grössere Taste (7) ein wesentlich grösseres Tastfeld (a) besitzt als eine zweite Taste (8) und dass beide Tasten (7, 8) unterschiedlich gestaltete Tastflächen (8b) aufweisen.

7. Armatur nach Anspruch 6, **dadurch gekennzeichnet, dass** die erste Taste (7) ein im wesentlichen rundes Tastfeld (A) und die zweite Taste (8) ein im wesentlichen längliches Tastfeld (B) aufweisen.

8. Armatur nach einem der Ansprüche 1 bis 7, **dadurch gekennzeichnet, dass** die beiden Tasten (7, 8) bezüglich der Schutzmembran (8) erhöht angeordnet sind.

9. Armatur nach einem der Ansprüche 1 bis 8, **dadurch gekennzeichnet, dass** sie eine Küchenbrause ist.

## Claims

1. Water outflow fitting, comprising a housing (2), a connecting device (3) for the connection of a water pipe, an outlet (6), an actuating device (5), and a switching valve which is disposed in the housing (2) and can be switched by means of the actuating device (5) between two settings with different jet formation, the actuating device (5) having two mutually spaced and independently actuable push buttons (7, 8) and a protective membrane (9), **characterized in that** the two push buttons (7, 8) are made of a relatively hard plastic and the membrane of a substantially softer elastomeric plastic, and **in that** the two push buttons (7, 8) and the protective membrane (9) form a one-piece injection-moulded unit.

2. Fitting according to Claim 1, **characterized in that** on the bottom side of the protective membrane (9) there is disposed a circumferential mounting frame (10), which is likewise made of a relatively hard plastic and which is engaged in an opening (22) of the housing (2).

3. Fitting according to Claim 1 or 2, **characterized in that** the two push buttons (7, 8), the protective membrane (9) and the mounting frame (10) form an injection-moulded unit.

4. Fitting according to one of Claims 1 to 3, **characterized in that** the protective membrane (9) between the two push buttons (7, 8) and around these two push buttons (7, 8) is of relatively flat configuration, and the two push buttons (7, 8) are respectively connected at their periphery, by injection moulding, to a turned-up rim (9a, 9b).

5. Fitting according to one of Claims 1 to 4, **characterized in that** the actuating device (5) is disposed over a rocker (14), which, for the switching of the switching valve, cooperates with the two push buttons (7, 8).

6. Fitting according to Claim 5, **characterized in that** a first, larger push button (7) possesses a substantially larger touch area (a) than a second push button (8), and **in that** the two push buttons (7, 8) have differently shaped touch surfaces (8a,8b).

7. Fitting according to Claim 6, **characterized in that** the first push button (7) has a substantially round touch area (A) and the second push button (8) has a substantially elongated touch area (B).

8. Fitting according to one of Claims 1 to 7, **characterized in that** the two push buttons (7, 8) are elevated with respect to the protective membrane (8).

9. Fitting according to one of Claims 1 to 8, **characterized in that** it is a kitchen spray head.

## Revendications

1. Robinetterie de sortie d'eau, comprenant un boîtier (2), un dispositif de raccordement (3) pour le raccordement d'une conduite d'eau, une sortie (6), un dispositif d'actionnement (5) et une soupape de commutation disposée dans le boîtier (2), qui peut être commutée au moyen du dispositif d'actionnement (5) entre deux positions pour former un jet différent, le dispositif d'actionnement (5) présentant deux boutons (7, 8) espacés l'un de l'autre et pouvant être actionnés indépendamment l'un de l'autre et une membrane de protection (9), **caractérisée en ce que** les deux boutons (7, 8) sont fabriqués en matière plastique relativement dure et la membrane est fabriquée en une matière plastique en caoutchouc élastomère beaucoup plus souple, et **en ce que** les deux boutons (7, 8) et la membrane de protection (9) forment une unité d'une seule pièce et fabriquée par moulage par injection.

2. Robinetterie selon la revendication 1, **caractérisée en ce que** l'on dispose sur le côté inférieur de la membrane de protection (9) un cadre de fixation périphérique (10) qui est également fabriqué en une matière plastique relativement dure et qui est emboîté dans une ouverture (22) du boîtier (2).

3. Robinetterie selon la revendication 1 ou 2, **caractérisée en ce que** les deux boutons (7, 8), la membrane de protection (9) ainsi que le cadre de fixation (10) forment une unité fabriquée par moulage par injection.

4. Robinetterie selon l'une quelconque des revendications 1 à 3, **caractérisée en ce que** la membrane de protection (9) est réalisée de manière relativement plate entre les deux boutons (7, 8) et autour de ces boutons (7, 8), et les deux boutons (7, 8) sont connectés à chaque fois par moulage par injection au niveau de leur périphérie à un bord retourné (9a, 9b).

5. Robinetterie selon l'une quelconque des revendications 1 à 4, **caractérisée en ce que** le dispositif d'actionnement (5) est disposé sur un levier basculant (14) qui coopère avec les deux boutons (7, 8) pour commuter la soupape de commutation.

6. Robinetterie selon la revendication 5, **caractérisée en ce qu'**un premier bouton plus gros (7) présente une surface de bouton (a) nettement plus grande qu'un deuxième bouton (8) et **en ce que** les deux boutons (7, 8) présentent des surfaces de bouton de configuration différente (8a, 8b).

7. Robinetterie selon la revendication 6, **caractérisée en ce que** le premier bouton (7) présente une surface de bouton essentiellement ronde (A) et le deuxième bouton (8) présente une surface de bouton (B) essentiellement allongée.

8. Robinetterie selon l'une quelconque des revendications 1 à 7, **caractérisée en ce que** les deux boutons (7, 8) sont disposés sous forme rehaussée par rapport à la membrane de protection (8).

9. Robinetterie selon l'une quelconque des revendications 1 à 8, **caractérisée en ce qu'**il s'agit d'une douche d'évier.
